Europäisches Patentamt

European Patent Office

Office européen des brevets

(19)

(11) **EP 1 267 153 A1**

(12) **EUROPEAN PATENT APPLICATION**

(43) Date of publication:
**18.12.2002 Bulletin 2002/51**

(51) Int Cl.⁷: **G01L 21/32**, G01L 21/34

(21) Application number: **02253730.2**

(22) Date of filing: **28.05.2002**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **11.06.2001 US 879356**

(71) Applicant: **Hewlett-Packard Company
Palo Alto, CA 94304 (US)**

(72) Inventor: **Liebeskind, John
Corvallis, OR 97330 (US)**

(74) Representative: **Jackson, Richard Eric et al
Carpmaels & Ransford,
43 Bloomsbury Square
London WC1A 2RA (GB)**

(54) **Micro high-vacuum pressure sensor**

(57)     A micro pressure sensor included within a low-pressure microelectronic device enclosure. The micro pressure sensor employs an electric field created by applying a large voltage potential difference to tiny conductive elements (302,304) within the micro pressure sensor. Electrons emitted via the influence of, and accelerated by, the electric field collide with gas molecules to produce positive ions. The positive ions are then ac-celerated toward a conductive element (304) coupled to a circuit. The current generated by the ions within the circuit coupled to the micro pressure sensor can be measured to determine the internal pressure within the low-pressure enclosure. The micro pressure sensor is manufactured by standard semiconductor fabrication techniques, and can be economically produced in large volumes.

Fig. 3A

EP 1 267 153 A1

**Fig. 3B**

**Fig. 3C**

**Description**

TECHNICAL FIELD

The present invention is related to low-pressure microenclosures for maintaining a low-pressure environment around a microchip or other microelectronic device and, in particular, to a micro high-vacuum pressure sensor included within a low-pressure microenclosure to measure internal pressures in the range of 10" to $10^{-8}$ Torr.

BACKGROUND OF THE INVENTION

During the past forty years, extremely precise, complex, and elegant methodologies have been developed in the field of semiconductor fabrication in order to mass produce complex integrated circuits used as processor and memory components within computers. Computer control is being applied to many different types of technological areas. Microchips and other devices produced by semiconductor fabrication techniques have become common components in a wide variety of electromechanical devices and systems, including automobiles, communications systems, machine tools, and many others. More recently, semiconductor fabrication techniques have been applied to manufacture tiny electromechanical devices in an emerging technological field referred to as micro-electromechanical systems ("MEMS").

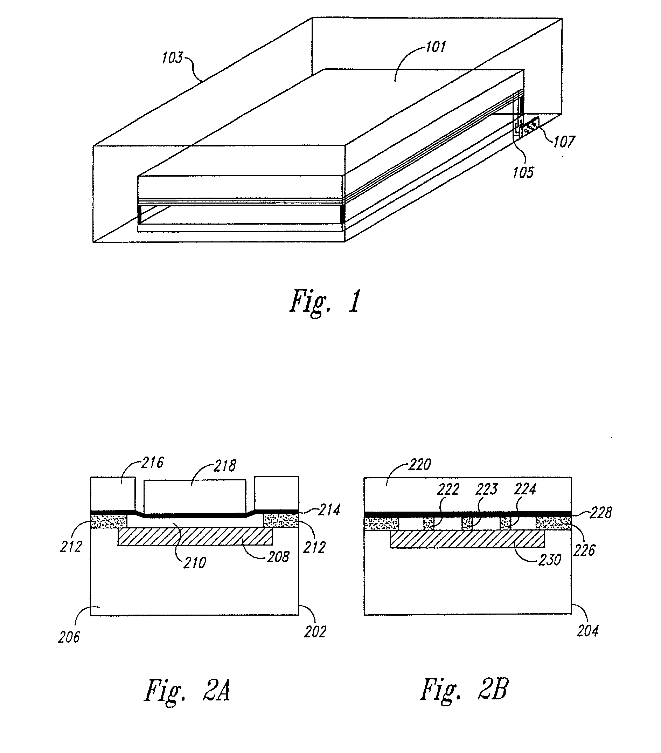

Certain MEMS devices require very low-pressure, partial-vacuum environments in which to operate. Figure 1 illustrates one type of low-pressure MEMS device. A microfabricated MEMS device 101 is enclosed within an airtight microenclosure 103 in order to maintain an internal low-pressure environment with internal pressures below $1 0^{-4}$ Torr. The microfabricated MEMS device 101 is coupled to external circuitry via internal signal lines 10.5 and a connector or adaptor 107. The microfabricated MEMS device 101 may be a microchip containing many hundreds or thousands of miniature mechanical, or electromechanical, components. The airtight microenclosure 103 may have linear dimensions on the order of a few inches to factions of an inch.

Although a low-pressure microenclosure can be manufactured with an internal pressure below $1 0^{-5}$ Torr, the pressure within a microenclosure may gradually increase with time due to leakage, sublimation of microenclosure or microdevice materials, or vaporization of metallic layers during operation of the microfabricated MEMS device within the microenclosure. Once the internal pressure rises above a certain threshold value, the performance of the enclosed MEMS device may degrade below acceptable performance ranges or fail altogether. Once performance of the enclosed MEMS device degrades, or the enclosed MEMS device fails, a device containing the enclosed MEMS device as a subcomponent may, in turn, suddenly fail.

A number of different MEMS pressure-related devices, including MEMS pressure sensors, have been developed. Figures 2A-B show two parts of a typical MEMS pressure-sensing device. The pressure sensing device relates the difference in capacitance between a sensor cell, shown in Figure 2A, and a reference cell, shown in Figure 2B, to the pressure within an environment containing the MEMS pressure sensor. The MEMS pressure sensor device is fabricated by standard semiconductor fabrication techniques from doped silicon substrates, silicon dioxide layers, and empty cavities etched out from between silicon dioxide and doped silicon layers. The sensor cell 202 and reference cell 204 are quite similar in structure. The sensor cell 202 comprises ap-type silicon substrate 206 in which an n-well 208 is formed by standard semiconductor fabrication techniques. An empty cavity 210 lies above the surface of the n-well 208. The walls of the cavity are formed from a field oxide layer 2 12. A thin elastic diaphragm 2 14 comprising a poly silicon layer overlies the empty cavity. An additional silicon dioxide layer 216 lies above the elastic diaphragm 214. The additional silicon dioxide layer 216 is etched to produce a rectangular boss 2 18 resting on the elastic diaphragm 2 14 above the empty cavity 2 10. Environmental pressure pushes the boss, and diaphragm on which it rests. inward into the empty cavity 210 until the pressure within the empty cavity 2 10 is equal to the environmental pressure. The elastic diaphragm 214 and n-well 208 together form parallel plates of a capacitor, and the amount of charge stored within the capacitor for a given voltage differential applied to the parallel plates is inversely proportional to the distance between the plates. The reference cell 204 is nearly identical to the sensor cell, with the exception that the top silicon dioxide layer 220 of the reference cell is not etched to create a boss, and additional columns 222-224 are left in the field oxide layer of the reference cell 226 so that the diaphragm 228 of the reference cell remains at a constant distance from the n-well 230 of the reference cell. By measuring the difference in the charge stored within the reference cell capacitor to the charge stored within the sensor cell capacitor, the inward displacement of the boss 2 18 within the sensor cell relative to the distance between the diaphragm 228 and the n-well 230 of the reference cell the can be electronically measured. The measured displacement is then directly related to the environmental pressure surrounding the sensor cell.

Unfortunately, diaphragm-based MEMS pressure sensing devices are not very sensitive to low-pressure differentials in the $10^{-1}$ Torr to $1 0^{-8}$ Torr range desirable for many low-pressure MEMS devices in low-pressure microenclosures, described with reference to Figure 1. Furthermore, diaphragm-based MEMS pressure sensors can degrade in performance over time with the accumulation of debris within the empty cavity. Other types of pressure sensors are far too bulky to include within low-pressure enclosures for microfabricated MEMS devices, and reliable, sensitive, and economical techniques for externally measuring pressure within a low-pressure enclosure have not been developed. Thus, designers and manufacturers of low-pressure enclosures for microfabricated MEMS devices and other microelectronic devices and circuits have thus recognized the need for a method and system to accurately monitor the pressure in such low-pressure enclosures.

## SUMMARY OF THE INVENTION

The present invention provides a micro high-pressure pressure sensor that may be fabricated by well-known microchip fabrication techniques for inclusion within a low-pressure microchip enclosure. In a first class of embodiments, small conductive features fabricated on the surface of a dielectric layer are separated by a small distance and held at a high voltage potential differential, creating an electric field between the features. A self-sustaining discharge forms in this field. When discharged electrons collide with a gas molecule, they may provide sufficient energy to ionize the gas molecule creating another free electron. Secondary emission will supply additional electrons when the ions recombine at a cathode surface creating a detectable electric current in a circuit coupled to the cathode. This current can be detected within the circuit by well-known current measurement devices, and is related to the internal pressure within the low-pressure enclosure. In a second class of embodiments, gas molecules are ionized by electrons emitted by a field emitter or thermionic emitter, and resulting positive ions are attracted to an ion collection surface included in an circuit in which the current contributed by recombination of the ions on the ion collection surface can be detected by well-known current detection methods. As in the first class of embodiments, this current is related to the pressure within the low-pressure enclosure.

## BRIEF DESCRIPTION OF THE DRAWINGS

Figure 1 illustrates one type of low-pressure MEMS device.
Figures 2A-B show two parts of a typical MEMS pressure-sensing device.
Figure 3A is a first embodiment of a micro pressure sensor.
Figure 3B shows a second embodiment of the micro pressure sensor.
Figure 3C illustrates a third embodiment of the micro pressure sensor.
Figure 4A shows a fourth embodiment of the micro pressure sensor.
Figure 4B shows a fifth embodiment of the micro pressure sensor.

## DETAILED DESCRIPTION OF THE INVENTION

The present invention is related to low-pressure enclosures for microfabricated MEMS devices and other microelectronic devices that require low-pressure environments for operation. Following manufacture, the initial low-pressure environment within a low-pressure enclosure may degrade over time, leading to increased pressure and eventual failure of the enclosed microelectronic device. In order to anticipate such failures, it is desirable to measure the pressure within the low-pressure pressure enclosure continuously or at regular intervals.

Because of the small size of the low-pressure enclosure, it is difficult to measure internal pressure by external methodologies. The inventors of the present invention recognized that it would be desirable to include a tiny electronic pressure sensor within the low-pressure enclosure that is electronically coupled to a circuit, so that the internal pressure within the low-pressure enclosure can be continuously monitored or monitored at regular intervals without breaching the low-pressure enclosure or requiring disassembly of an electronic device in which the low-pressure enclosure is contained.

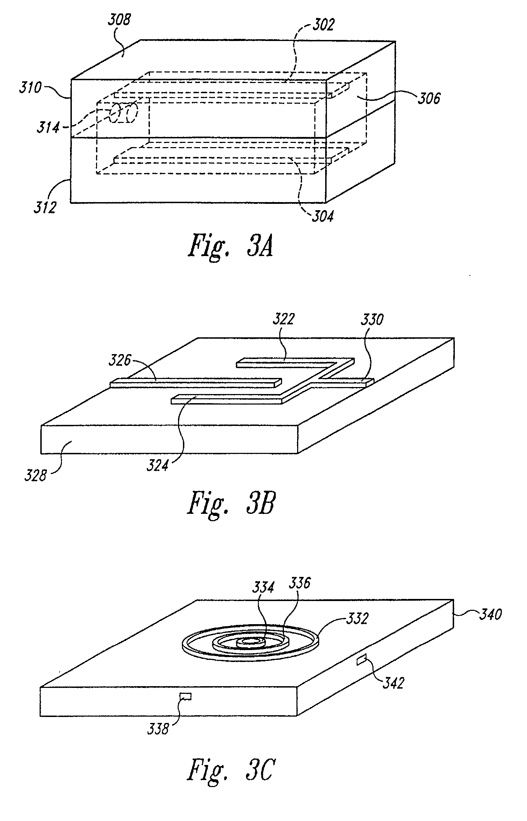

A first set of embodiments of micro pressure sensors that represent alternative embodiments of the present invention is illustrated in Figures 3A-C. This first set of embodiments includes alternative embodiments in which small conductive features fabricated on the surface of a dielectric layer are separated by a small distance and are coupled to an external voltage source to induce a relatively large voltage differential between the conductive features, producing an electric field between the conductive features. A self-sustaining discharge forms in this field. Electrons drift towards the anode. When electrons collide with a molecule, they may provide sufficient energy to ionize the molecule creating another free electron. Secondary emission will supply additional electrons when the ions recombine at the cathode surface. At higher gas densities, the chances of ionizing collisions will increase, creating a higher current flow between the cathode and anode. Cosmic rays or noise initiates this self-sustaining discharge. This current can be related to the internal pressure within the low-pressure enclosure by an empirical formula, such as:

$$I = \alpha P^x$$

where a is a constant

$P$ is the internal pressure, and
x is an empirically derived value, generally between 1.1-1.4

Figure 3A is a first embodiment of a micro pressure sensor. A first conductive feature 302 and a second conductive feature 304 are embedded within a cavity 306 within a dielectric substrate 308 formed by bonding together two substrate components 3 10 and 3 12 related by mirror-plane symmetry that each includes a single conductive feature (302 and 304) along the bottom of a well-like cavity. The empty cavity 306 within the completed device communicates with the low-pressure environment within an enclosure containing the device via one or more apertures 3 14.

Figure 3B shows a second embodiment of the micro pressure sensor. In the second embodiment, three parallel conductor strips 322, 324, and 326 are fabricated on a non-conducting substrate 328 or a substrate with a surface dielectric layer. The outer strips 322 and 324 are electrically coupled to a conductive element 330 that may be coupled to an external circuit. The third inner strip 326, parallel to the two outer strips 322 and 324, is placed midway between the two outer strips. The third inner strip 326 is also coupled to the external circuit. An electric field is generated between the two outer strips 322 and 324 and the third inner strip 326, and the device operates according to the above-described principles.

Figure 3C illustrates a third embodiment of the micro pressure sensor. In this third embodiment, annular conductive strips 332 and 334 serve the same role in the alternative pressure sensor as the outer conductive strips 322 and 324 in the second embodiment described with reference to Figure 3B. In the third embodiment, a middle annular conductive strip 336 plays an analogous role to the inner conductive strip 326 in the second embodiment described with reference to Figure 3B. The inner and outer annular strips 332 and 334 may be coupled to a conductive element 338 embedded within the substrate 340 on which the annular conductive strips are deposited or to which the annular conductive strips are affixed, and the middle annular conductive strip 336 may be coupled to a second embedded conductive element 342. Operation of the third embodiment is equivalent to that of the first and second embodiments discussed with reference to Figures 3A-B.

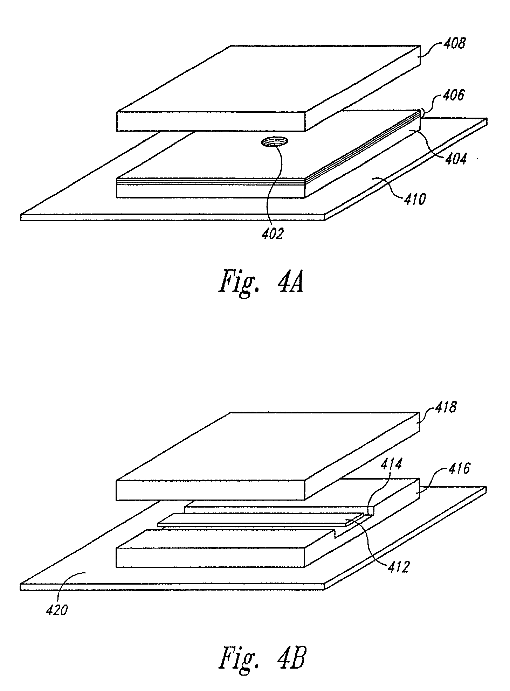

A second set of embodiments of micro pressure sensors that represent alternative embodiments of the present invention is illustrated in Figures 4A-B. In this second set of embodiments, a field emitter component is microfabricated on a semiconductor or dielectric substrate and held at a large voltage potential differential with respect to an anode target. The field emitter emits a beam of electrons that are accelerated in the electric field between the field emitter and the target anode. Gas molecules that stray within the beam of electrons may be ionized to generate positive gas molecule ions and additional free electrons. The ions are attracted to a third conductive surface held at a negative potential with respect to the field emitter device. When these positive gas molecule ions recombine at the third conductive surface, a small ion-induced current can be detected within a circuit coupled to the third conductive surface, and this additional ion-induced current will reflect the internal pressure within the low-pressure enclosure in which the micro pressure sensor is included. The relationship between the internal pressure within the low-pressure enclosure and the ion-induced current can be described by an empirical formula similar to the empirical formula shown above describing the ion-induced current in the embodiments of the first set of embodiments. However, for this embodiment, the value of the exponent, "x," is close to 1.

Figure 4A shows a fourth embodiment of the micro pressure sensor. In the fourth embodiment, one or more field emitter tips 402 microfabricated on a semiconductor or dielectric substrate 404 via interleaving layers of dielectric and metallic substances 406, and held at a large voltage potential differential with an anode target, that emits a beam of electrons that are accelerated in an electric field towards the target anode 408. This beam of electrons ionizes gas molecules that stray into the path of the beam, generating positive ions that are attracted to a third conductive surface 410 held at negative potential with respect to the base of the field emitter tip. When these positive ions recombine at the third conductive surface 4 10, a small ion current can be detected within an external circuit coupled to the third metal surface, and this current will reflect the internal pressure within the low-pressure enclosure in which the micro pressure sensor is included.

Figure 4B shows a fifth embodiment of the micro pressure sensor. This fifth embodiment is quite similar to the fourth embodiment, described above, with the exception that, in place of the field emitter tip 402, a filament 412 suspended within a cavity 414 of a substrate 416 is used as a thermionic emission device. The filament, acting as a resistive heating element, emits electrons. As in the fourth embodiment, emitted electrons are accelerated towards a target anode 4 18 and ionized gas molecules are accelerated towards a conductive surface 420 held at a negative potential with respect to the field emitter filament 4 12.

The various embodiments of the micro pressure sensor of the present invention may be sensitive to pressure changes within a range of pressures from $10^{-1}$ Torr to $10^{-8}$ Torr and lower. The strength of the electric fields required to ionize gas molecules, in the first set of embodiments, or to drive the field emission devices, in the second set of embodiments, may fall within a range of 5 to 50 Volts per micron of separation between conductive elements. Voltage potentials, electric field strengths, and other parameters of the devices will vary with varying geometries, varying composition of the conductive elements, the design, size, and electrical properties of external circuits to which the devices are connected, and other such variables.

Although the present invention has been described in terms of a particular embodiment, it is not intended that the invention be limited to this embodiment. Modifications within the spirit of the invention will be apparent to those skilled in the art. For example, rather than the continuous conductive strips shown in the second and third embodiments, a series of raised conductive features, or microbumps, may be employed to generate the electrical field and to serve as anodes and cathodes for electron emission and ion adsorption. In addition, a permanent magnet can be affixed above or below the plane of the micro pressure sensor to induce electrons accelerated in the electric field between conductive elements to travel in spiral paths, increasing both their time of flight and the probability of their collision with gas molecules. Micro pressure sensors of a variety of sizes using a variety of different substrate and conductor materials may be fabricated to provide desired sensitivity with respect to acceptable voltage potential differentials applied to the conductive elements of the micro pressure sensor. All five embodiments discussed above can be fabricated using any number of different well-known semiconductor microchip fabrication techniques. Additional geometries and configurations for the components of the three micro pressure sensor embodiments may be used to produce micro pressure sensors with a variety of desirable physical characteristics. Current sensing circuits integral to the pressure sensing functionality of the micro pressure sensor may be external to the low-pressure enclosure containing the micro pressure sensor, may be internally co-located with the micro pressure sensor, or may be integrated within the micro pressure sensor.

The foregoing description, for purposes of explanation, used specific nomenclature to provide a thorough understanding of the invention. However, it will be apparent to one skilled in the art that the specific details are not required in order to practice the invention. The foregoing descriptions of specific embodiments of the present invention are presented for purpose of illustration and description. They are not intended to be exhaustive or to limit the invention to the precise forms disclosed. Obviously many modifications and variations are possible in view of the above teachings. The embodiments are shown and described in order to best explain the principles of the invention and its practical applications, to thereby enable others skilled in the art to best utilize the invention and various embodiments with various modifications as are suited to the particular use contemplated. It is intended that the scope of the invention be defined by the following claims and their equivalents:

**Claims**

1. A micro pressure sensor included within a low-pressure microelectronic device enclosure, the micro pressure sensor comprising:

    a first conductive feature (302) deposited on a non-conductive substrate (308);

    a second conductive feature (304) deposited on the non-conductive substrate (312), separated from the first conductive feature (302); and

    a circuit coupled to the first conductive feature and the second conductive feature that establishes a voltage potential difference between the first conductive feature (302) and the second conductive feature (304) and that includes a current sensing circuit that measures a current of a glow discharge between the first conductive element and the second conductive element.

2. The micro pressure sensor of claim 1 wherein the first conductive feature comprises two outer conductive strips (322, 324) deposited on the non-conductive substrate (328) and the second conductive feature comprises an inner conductive strip (326) deposited on the non-conductive substrate (328) between the two outer conductive strips (322, 324), the two outer conductive strips and the inner strip selected from among conductive strips including:

    continuous metal strips; and
    lines of raised conductive microbumps.

3. The micro pressure sensor of claim 1 wherein the first conductive feature comprises an inner (334) and an outer (332) annular conductive strip deposited on the non-conductive substrate (340) and the second conductive feature comprises a middle annular conductive strip (336) deposited on the non-conductive substrate (340) between the inner and outer annular conductive strips, the inner, outer, and middle annular conductive strips comprising conductive strips selected from among conductive strips including:

    continuous annular metal strips; and
    raised conductive microbumps.

4. The micro pressure sensor of claim 1 wherein the first conductive feature (302) and the second conductive feature (304) are positioned on opposite sides of an empty cavity (306) within a non-conductive substrate (308, 312).

5. A method for monitoring an internal pressure within a low-pressure microelectronic device enclosure, the method comprising:

    including the micro pressure senor of claim 1 within the low-pressure microelectronic device enclosure;
    coupling the micro pressure sensor to a circuit that includes a current sensing circuit; and
    measuring a current contributed to the circuit by ions and electrons generated by collision of gas molecules with electrons accelerated in an electric field generated by components (302, 304) of the micro pressure sensor.

6. A micro pressure sensor included within a low-pressure microelectronic device enclosure, the high-vacuum micro pressure sensor comprising:

> an electron source device;
> an anode target that establishes, along with the field emitter device, an electric field in which electrons emitted by the field emitter device are accelerated toward the anode;
> an additional surface to which ions produced by collisions of emitted electrons and gas molecules are attracted, and to which the ions contribute an electric current; and
> a circuit coupled to the anode surface that includes a current sensing circuit that measures the electric current contributed to the circuit by the ions produced by collisions of emitted electrons and gas molecules.

7. The micro pressure sensor of claim 6 wherein the electron source device is selected from among electron source devices including:

> a field emitter tip; and
> a resistive heating element that acts as a thermionic emitter.

8. A method for monitoring an internal pressure within a low-pressure microelectronic device enclosure, the method comprising:

> including the micro pressure senor of claim 6 within the low-pressure microelectronic device enclosure;
> coupling the micro pressure sensor to a circuit that includes a current sensing circuit; and
> measuring a current contributed to the circuit by ions and electrons generated by collision of gas molecules with electrons accelerated in an electric field generated by components of the micro pressure senor.

9. The micro pressure sensors of claim 1 or claim 6 wherein pressures of between $10^{-8}$ and $10^{-4}$ Torr can be measured via the current sensing circuit.

10. The micro pressure sensors of claim 1 or claim 6 further including a permanent magnet to directionally accelerate electrons within the electric field, causing them to travel in spiral paths.

Fig. 1

Fig. 2A

Fig. 2B

Fig. 3A

Fig. 3B

Fig. 3C

*Fig. 4A*

*Fig. 4B*

European Patent
Office

**EUROPEAN SEARCH REPORT**

Application Number

EP 02 25 3730

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 6 132 278 A (KANG WENG POO ET AL) 17 October 2000 (2000-10-17) * abstract * * column 17, line 32 - column 18, line 30; figures 24-28 * | 1,5,6,8,9 | G01L21/32 G01L21/34 |
| A | DE 41 37 527 A (SIEMENS AG) 19 May 1993 (1993-05-19) * abstract; figure 1 * | 1,5,6,8,9 | |
| A | WO 98 05935 A (INTEGRATED SENSING SYSTEMS INC) 12 February 1998 (1998-02-12) * page 9, line 5 - line 34; figure 6 * | 1,5,6,8 | |
| A | EP 1 039 285 A (BOC GROUP PLC) 27 September 2000 (2000-09-27) * abstract; figure 1 * | 6,8,9 | |
| A | PATENT ABSTRACTS OF JAPAN vol. 007, no. 212 (P-224), 20 September 1983 (1983-09-20) & JP 58 106431 A (MEIDENSHA KK), 24 June 1983 (1983-06-24) * abstract * | 1,3 | TECHNICAL FIELDS SEARCHED (Int.Cl.7) G01L H01J |

The present search report has been drawn up for all claims

| Place of search | Date of completion of the search | Examiner |
|---|---|---|
| MUNICH | 16 September 2002 | Gerken, S |

## ANNEX TO THE EUROPEAN SEARCH REPORT
## ON EUROPEAN PATENT APPLICATION NO.

EP 02 25 3730

This annex lists the patent family members relating to the patent documents cited in the above-mentioned European search report.
The members are as contained in the European Patent Office EDP file on
The European Patent Office is in no way liable for these particulars which are merely given for the purpose of information.

16-09-2002

| Patent document cited in search report | | Publication date | Patent family member(s) | | Publication date |
|---|---|---|---|---|---|
| US 6132278 | A | 17-10-2000 | AU<br>EP<br>WO | 3735697 A<br>0974156 A1<br>9844529 A1 | 22-10-1998<br>26-01-2000<br>08-10-1998 |
| DE 4137527 | A | 19-05-1993 | DE | 4137527 A1 | 19-05-1993 |
| WO 9805935 | A | 12-02-1998 | US<br>AU<br>WO | 6140144 A<br>4053697 A<br>9805935 A1 | 31-10-2000<br>25-02-1998<br>12-02-1998 |
| EP 1039285 | A | 27-09-2000 | EP<br>JP | 1039285 A2<br>2000292297 A | 27-09-2000<br>20-10-2000 |
| JP 58106431 | A | 24-06-1983 | NONE | | |

EPO FORM P0459

For more details about this annex : see Official Journal of the European Patent Office, No. 12/82